# EUROPÄISCHE PATENTSCHRIFT

(11) **EP 0 315 779 B1**
(45) Veröffentlichungstag und Bekanntmachung des Hinweises auf die Patenterteilung: **01.06.1994**
(21) Anmeldenummer: 88116688.8
(22) Anmeldetag: 07.10.1988
(51) Int. Cl.: G05D 7/01, B65D 83/14

(54) **Sprühkopf für einen Behälter für eine unter dem Druck eines Treibgases stehende Flüssigkeit**
Sprayhead for a container containing a fluid under the pressure of a propelling gas
Tête de pulvérisation pour un récipient contenant un fluide pressurisé par un gaz propulseur

(30) Priorität: 10.11.1987 DE 3738163; 17.12.1987 DE 3742901
(43) Veröffentlichungstag der Anmeldung: 17.05.1989
(73) Patentinhaber: F.P.D. Future Patents Development Company S.A., L-2012 Luxembourg (LU)
(72) Erfinder:
(74) Vertreter: Popp, Eugen, Dr.

(56) Entgegenhaltungen:
- WO-A-86/04163
- US-A- 4 487 334
- US-A- 4 546 905

## Beschreibung

Die Erfindung betrifft einen Sprühkopf für einen Behälter für eine unter dem Druck eines Treibgases stehende Flüssigkeit gemäß dem Oberbegriff des Patentanspruches 1.

Derartige Sprühköpfe für sogenannte Aerosol-Behälter sind bekannt, z. B. aus der WO 86/04163. Die bekannte Konstruktion ist jedoch äußerst aufwendig. Sie besteht aus einem im Sprühkopf längsverschieblich gelagerten Kolben, der unter der Vorspannung einer Schraubendruckfeder steht derart, daß bei Nichtgebrauch des Aerosol-Behälters die Fluidverbindung zur Sprühdüse geschlossen ist. Der Kolben steht an der einen Seite unter Umgebungsdruck und an der anderen Seite unter dem Behälter-Überdruck, nachdem das Abgabeventil des Aerosol-Behälters geöffnet worden ist. Dann wird der Kolben unter der Einwirkung des Behälter-Überdrucks gegen die Wirkung der elastischen Vorspannung sowie die Wirkung des Umgebungsdrucks in eine Fluidverbindungs-Freigabestellung bewegt unter gleichzeitiger Ausbildung einer Verengung des Durchflußquerschnitts und entsprechender Drosselung der Fluidabgabe. Der im Sprühkopf beweglich gelagerte Kolben ist gegenüber einer entsprechenden Zylinderwandung durch zwei an den beiden Enden des Kolbens angeordnete Dichtringe aus Gummi oder dergleichen Werkstoff abgedichtet. Die Dichtringe kommen mit dem zu versprühenden Medium in Kontakt, wobei es sich dabei meist um ein Medium handelt, welches relative aggressiv reagiert mit der Folge, daß die Dichtringe aufquellen und der Kolben dementsprechend schwergängig wird bis hin zur Funktionslosigkeit, insbesondere nach längerer Standzeit. In letztgenanntem Fall besteht sogar die Gefahr, daß sich der Kolben überhaupt nicht mehr in eine Offenstellung bewegen läßt aufgrund zu hoher "Losbrechkraft" mit der Folge, daß die Sprühdüse verschlossen bleibt und der Aerosol-Behälter trotz teilweiser Füllung weggeworfen werden muß. Die dadurch bedingte Ausschußrate beim Verbraucher ist nicht akzeptabel.

Aus der US-PS 4 487 334 ist es bekannt, vor dem Abgabeventil im Behälterinnern eine variable Drossel anzuordnen, die den Durchflußquerschnitt des zum Abgabeventil führenden Fluidkanals in Abhängigkeit vom Druck des Treibgases bestimmt. Diese Konstruktion ist ebenfalls äußerst aufwendig und darüber hinaus hinsichtlich ihrer Funktionsbeständigkeit äußerst zweifelhaft aufgrund nicht zu vermeidender Leckagen im Bereich der Drossel.

Der vorliegenden Erfindung liegt nun die Aufgabe zugrunde, ausgehend von dem genannten Stand der Technik einen Sprühkopf der eingangs genannten Art zu schaffen, der mit einem dauerhaft funktionssicheren Sprüh-Regulator versehen ist, der sich darüber hinaus durch eine denkbar einfache Konstruktion auszeichnet.

Diese Aufgabe wird durch die kennzeichnenden Merkmale des Patentanspruches 1 gelöst, wobei die weiteren Ansprüche vorteilhafte konstruktive Details der Erfindung betreffen.

Dadurch, daß die elastische Vorspannung des Drosselkörpers körperimmanent ist, d. h. durch die Ausbildung und Form des Drosselkörpers selbst vorgegeben ist, sind gesonderte Vorspannelemente in Form von Schraubendruckfedern oder dgl. entbehrlich. Da ferner der Druchflußquerschnitt stets offengehalten ist, ist die Funktion des Sprühkopfs auch nach längeren Standzeiten gewährleistet. Darüber hinaus sind durch diese Maßnahme keine relativ zu einer Wandung bewegte Dichtelemente erforderlich, die zu den eingangs genannten Schwierigkeiten führen können.

Eine besonders einfache und wirkungsvolle Ausführung des Erfindungsgedankens ist dadurch gekennzeichnet, daß der Drosselkörper mit einer im Sprühkopfgehäuse angeordneten Membran verbunden, insbesondere einstückig ausgebildet ist, welche dem Drosselkörper die erforderliche elastische Vorspannung vermittelt. Diese ist insbesondere dann gewährleistet, wenn die Membran entsprechend Anspruch 9 ausgeführt ist.

Eine besonders einfache Regelung des Durchflußquerschnitts ergibt sich durch einen Ventilkörper entsprechend Anspruch 3 und/oder 4, wobei Anspruch 5 eine geringfügig abgewandelte Ausführungsform betrifft, bei der zwar ein zusätzliches elastisches Vorspannelement verwendet wird, im übrigen der Grundgedanke der Erfindung beibehalten ist.

Treibgas im Sinne der Erfindung ist komprimiertes Gas, wie N₂ oder Luft, dessen Druck zwangsläufig mit der Entleerung des Aerosol-Behälters abnimmt.

Die Ausführungsform nach Anspruch 10 ist durch einen besonders geringen Konstruktionsaufwand gekennzeichnet.

Die Ausführungsformen nach den Ansprüchen 11 ff. gewährleisten auch bei Betätigung in extremer Überkopflage des Behälters, daß kein Treibgas nach außen entweicht, wodurch die Funktion des Aerosol-Behälters erheblich reduziert würde bis hin zur Funktionslosigkeit.

Nachstehend werden bevorzugte Ausführungsformen der Erfindung anhand der beigefügten Zeichnung näher beschrieben.
Es zeigen:
- Fig. 1: eine erste Ausführungsform eines Aerosol-Behälters mit erfindungsgemäß ausgebildetem Sprühkopf im schematischen Längsschnitt;
- Fig. 2: den Sprühkopf gemäß Fig. 1 im Längsschnitt und vergrößertem Maßstab;
- Fig. 3: einen Teil der abgewandelten Ausführungsform eines Sprühkopfs entsprechend der Darstellung nach Fig. 2;
- Fig. 4: eine weitere Ausführungsform eines Teils eines Sprühkopfs entsprechend der Darstellung nach Fig. 3;
- Fig. 5 - 7: Sprühköpfe gemäß den Fig. 2 - 4, jedoch jeweils mit abgewandelter Drosselkörper-Membran;
- Fig. 8: eine noch weiter abgewandelte Ausführungsform eines Sprühkopfes im Längsschnitt und vergrößertem Maßstab;
- Fig. 9: einen Sprühkopf entsprechend Fig. 5, jedoch mit zusätzlichem Überkopf-Schließventil im Abgabeventilkörper, im Längsschnitt;
- Fig. 10: das Überkopf-Schließventil der Ausführungsform nach Fig. 9 im Längsschnitt und vergrößertem Maßstab.

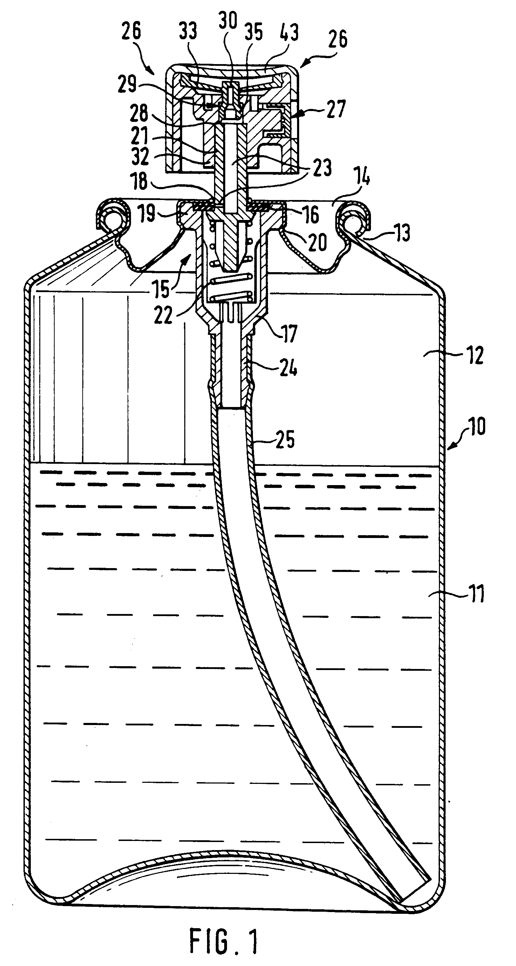

Fig. 1 zeigt im Längsschnitt einen sogenannten Aerosol-Behälter 10, der mit einem flüssigen Medium 11 sowie einem Treibgas 12 gefüllt ist, welches anfänglich unter einem Druck von etwa 9 bar steht. Das flüssige Medium 11 nimmt etwa zwei Drittel Füllraum ein, während das Treibgas 12 etwa ein Drittel des Behältervolumens ausmacht. Als Treibgas dient z. B. komprimierter Stickstoff oder auch komprimierte Luft. Der Behälter 10 besteht aus dünnem Weißblech oder dgl. Material. Die obere Behälteröffnung 13 ist durch einen Deckel 14 ebenfalls aus Weißblech oder dgl. Material verschlossen.

Der Deckel 14 weist in an sich bekannter Weise eine zentrale Öffnung 18 zur Aufnahme eines Abgabeventils bzw. Aerosol-Ventils 15 auf derart, daß der Ventilkörper 17 des Abgabeventils 15 fluiddicht am Öffnungsrand der Deckelöffnung 18 fixiert ist. Zu diesem Zweck weist der Ventilkörper 17 des Abgabeventils 15 einen sich radial nach außen erstreckenden Umfangsflansch 19 auf, der im montierten Zustand von einem am Deckel radial nach innen ausgeformten Ringvorsprung 20 derart hintergriffen ist, daß der Ventilkörper 17 klemmend zwischen der die Öffnung 18 begrenzenden Deckelwand und dem erwähnten Ringvorsprung 20 gehalten ist. Zwischen der die Öffnung 18 begrenzenden Deckelwand und dem Umfangsflansch 19 des Ventilkörpers 17 ist eine Dichtscheibe 16 aus Gummi oder dgl. elastischem sowie korrosionsbeständigem Dichtmaterial angeordnet.

Das Abgabeventil 15 ist in an sich bekannter Weise ausgebildet. Dementsprechend ist im Ventilkörper 17 ein Abgaberöhrchen 21 axial verschieblich und/oder kippbar gelagert, und zwar aus einer Schließstellung (Fig. 1) heraus entgegen der Wirkung einer Schraubendruckfeder 22, wobei die Dichtscheibe 16 das Abgaberöhrchen 21 eng umschließt derart, daß die Dichtscheibe 16 in Schließstellung des Abgabeventils 15 den im Abgaberöhrchen 21 ausgebildeten Austragkanal 23 fluiddicht schließt.

An einem behälterinneren Anschlußstutzen 24 des Ventilkörpers 17 ist ein bis zum Boden des Behälters 10 reichendes Steigröhrchen 25 angeschlossen, durch welches bei Öffnung des Abgbeventils 15 das Medium 11 unter dem Druck des Treibgases 12 ausgetragen wird.

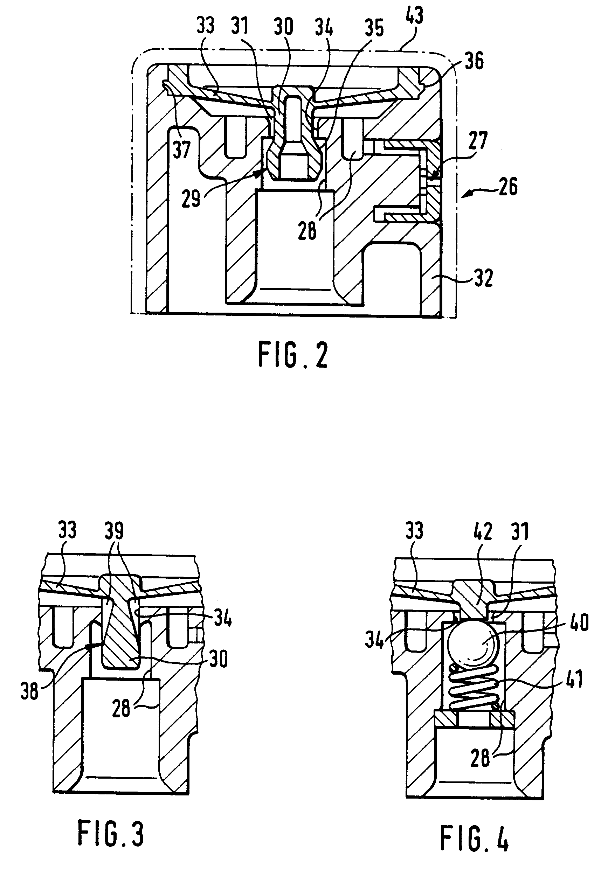

Am oberen freien Ende des Abgaberöhrchens 21 ist ein Sprühkopf 26 mit einer seitlichen Sprühdüse 27 angeordnet, im vorliegenden Fall aufgesteckt. Auf die Konstruktion des Sprühkopfs 26 wird weiter unten noch näher eingegangen, insbesondere anhand der Fig. 2 bis 10.

Bei Aerosol-Behältern mit komprimiertem Gas als Treibgase nimmt mit zunehmender Entleerung der anfängliche Sprühdruck von etwa 9 bar zunehmend ab bis auf etwa 3 bar mit der Folge einer entsprechend reduzierten Austragsrate. Aus diesem Grunde hat man vorgeschlagen, sogenannte Sprüh-Regulatoren vorzusehen, mit denen eine vorausbestimmte, über die gesamte Entleerung des Behälters etwa gleichmäßige Ausstoßrate pro Zeiteinheit gewährleistet ist. Im vorliegenden Fall ist zu diesem Zweck gemäß den Fig. 1 und 2 im Sprühkopf 26, und zwar konkret in der Fluidverbindung 28 zwischen dem Abgaberöhrchen 21 und der Sprühdüse 27 eine Drossel 29 mit einem elastisch vorgespannten Drosselkörper 30 angeordnet, an dessen eine Seite der Umgebungsdruck und an dessen anderen, nämlich behälterinneren Seite der im Behälterinnern herrschende Überdruck wirksam ist. Durch den elastisch vorgespannten Drosselkörper 30 läßt sich der Durchflußquerschnitt 31 in Abhängigkeit vom Behälterüberdruck regeln derart, daß bis zur im wesentlichen vollständigen Entleerung des Behälters 10 durch die Sprühdüse 27 eine etwa konstante Menge Flüssigkeit 11 pro Zeiteinheit austragbar ist.

Der Drosselkörper 30 ist an einer im Sprühkopfgehäuse 32 fixierten Membran 33 einstückig angeformt, wobei der Drosselkörper 30 durch die Membran 33 eine elastische Vorspannung erhält derart, daß bei maximalem Behälterüberdruck ein minimaler Durchflußquerschnitt (31) offengehalten ist. Entsprechend Fig. 2 ist der Drosselkörper 30 einer kreiszylindrischen Öffnung 34 innerhalb der Fluidverbindung 28 zugeordnet, derart, daß durch axiale Bewegung des Drosselkörpers 30 die genannte Öffnung 34 mehr oder weniger weit offen ist. Wie Fig. 2 erkennen läßt, erstreckt sich der Drosselkörper 30 durch die Fluidöffnung 34 hindurch, wobei dieser Öffnung ein Drosselabschnitt 36 mit in axialer Richtung zunehmendem bzw. abnehmendem Querschnitt zugeordnet ist. Bei der Ausführungsform nach Fig. 2 ist der mit der Öffnung 34 zusammenwirkende Drosselabschnitt 35 kegelstumpfförmig ausgebildet derart, daß sich der Querschnitt in Richtung von der Fluidöffnung 34 zum Behälterinnern hin vergrößert mit der Folge, daß mit nachlassendem Behälterinnendruck der Durchflußquerschnitt zunehmend größer wird aufgrund der durch die Membran 33 bewirkten elastischen Beaufschlagung des Drosselkörpers 30 und der dadurch bedingten axialen Bewegung des Drosselkörpers 30 in Richtung zum Behälter 10 hin. Auf diese Weise wird eine Regelung des Druchflußquerschnitts 31 erreicht derart, daß der Druck an der Sprühdüse über die gesamte Gebrauchsdauer der Aerosoldose etwa konstant bleibt, z. B. etwa 3,2 bar. Da der Druck an der Sprühdüse der Austragsmenge pro Zeiteinheit proportional ist, erhält man auf diese Weise eine gleichbleibende Ausstoßrate pro Zeiteinheit. Die Membran 33 ist an der Oberseite des Sprühkopfgehäuses 32 fixiert, und zwar nach Art einer Rastverbindung (Rastvorsprung 36 und Rastnut 37 am Sprühkopfgehäuse 32).

Bei den Ausführungsformen nach den Fig. 1 bis 4 ist die Membran 33 flach/kegelstumpfförmig ausgebildet, wobei die kleinere Grundfläche dem Behälter 10 näher liegt als die größere Grundfläche, längs deren Umfangsrandes (Rastvorsprung 36) die Membran 33 am Sprühkopfgehäuse 32 fixierbar ist, und wobei im Bereich der kleineren Grundfläche der Drosselkörper 30 angeformt ist derart, daß er sich zum Behälter 10 hin erstreckt, bei der Ausführungsform nach den Fig. 1 und 2 durch die erwähnte Fluidöffnung 34 innerhalb der Fluidverbindung 28 hindurch derart, daß der kegelstumpfförmige Drosselabschnitt 35 an der dem Behälter zugewandten Seite der Fluidöffnung 34 liegt. Der Drosselabschnitt 35 ist radial elastisch ausgebildet, so daß er zum Zwecke der Montage des Sprühkopfes durch die Fluidöffnung 34 hindurchgepreßt werden kann.

Die Wandstärke der Membran 33 nimmt von radial außen nach radial innen bis zum Anschluß des Drosselkörpers 30 ab. Die Membran 33 besteht ebenso wie der Sprühkopf 32 vorzugsweise aus Kunststoff.

Die Ausführungsform nach Fig. 3 unterscheidet sich von derjenigen nach den Fig. 1 und 2 nur hinsichtlich der Ausbildung des Drosselkörpers 30, und zwar konkret hinsichtlich der axialen Querschnittsveränderung. Der Drosselkörper 30 nach Fig. 3 weist eine kreiszylindrische Umfangsfläche 38 auf, in die zwei diametral angeordnete Axialnuten 39 eingearbeitet sind derart, daß die Nutentiefe ausgehend vom Membrananschluß in Richtung zum nichtdargestellten Behälter stetig abnimmt. Der Drosselkörper 30 erstreckt sich wiederum durch die Fluidöffnung 34 innerhalb der erwähnten Fluidverbindung 28 hindurch, wobei die Axialnuten im Bereich der Fluidöffnung 34 liegen. Auf diese Weise wird mit dem Drosselkörper 30 nach Fig. 3 in Verbindung mit der Membran 33 derselbe Effekt erzielt wie bei der Ausführungsform nach den Fig. 1 und 2.

Die Ausführungsform nach Fig. 4 zeichnet sich dadurch aus, daß der elastisch nachgiebigen Membran 33 ein gesonderter Drosselkörper in Form einer Kugel 40 angeordnet ist, die entgegen der Elastizität der Membran 33 elastisch vorgespannt ist, und zwar durch eine Schraubendruckfeder 41 derart, daß bei maximalem Behälterüberdruck ein minimaler Druchflußquerschnitt 31 wie bei den vorbeschriebenen Ausführungsformen offengehalten ist. Die Membran 33 liegt stets in Anlage an der Kugel 40, und zwar über einen zentralen, sich axial erstreckenden zapfenartigen Vorsprung 42.

Es sie an dieser Stelle noch vermerkt, daß die elastische Vorspannung der Membran 33 selbstverständlich nur dann wirksam ist, wenn der Behälterüberdruck in der Fluidverbindung 28 wirksam ist. Bei Nichtgebrauch und geschlossenem Abgabeventil 15 herrscht in der Fluidverbindung 28 Umgebungsdruck. Die Membran befindet sich dann in einem Gleichgewichtszustand, in dem der Fluidquerschnitt 31 maximal offen ist. Die elastische Vorspannung des Drosselkörpers 30 durch die Membran 33 ist also nur beim Gebrauch der Aerosoldose wirksam.

Selbstverständlich ist die Membran 33 gegenüber äußerer Einwirkung abgedeckt. Die entsprechende Abdeckung ist in den Fig. 1 und 2 mit der Bezugsziffer 43 gekennzeichnet.

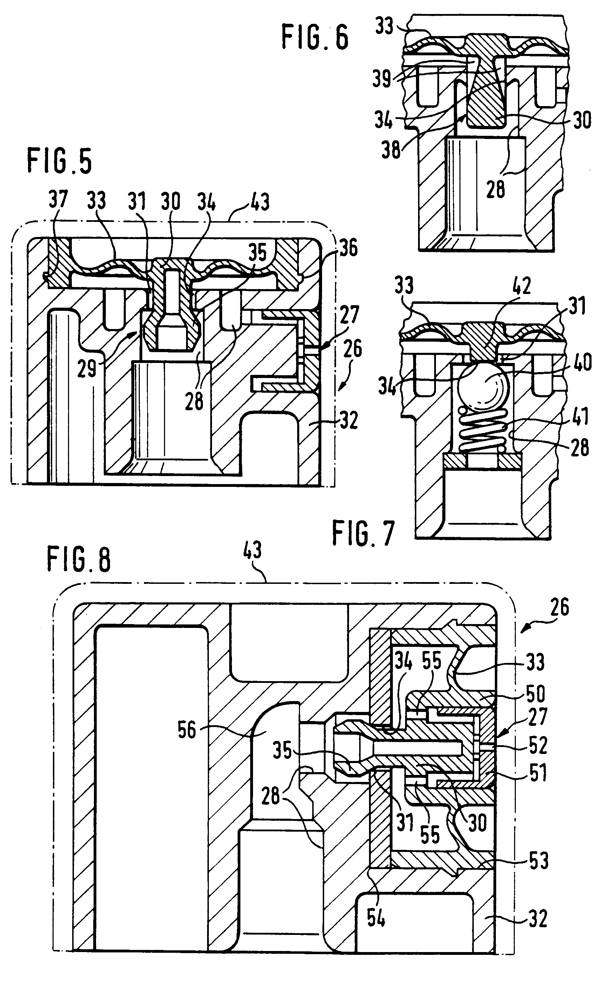

Gemäß Fig. 5 weist die Membran 33 einen gewellten Radial-Querschnitt zwischen äußerem Umfangsrand und dem Anschluß des zentralen Drosselkörpers 30 auf. Diese Ausführungsform gilt selbstverständlich auch für die Konstruktionen nach Fig. 3 oder Fig. 4, wie anhand der Fig. 6 und 7 dargestellt ist. Bei der Ausführungsform nach Fig. 5 ist die Membran 33 von radial außen nach innen durch eine sich zum Behälter bzw. nach unten hin erstreckende rotationssymmetrische Welle gekennzeichnet, an die sich dann eine nach oben hin erstreckende, rotationssymmetrische Welle anschließt, die bis zum Drosselkörper 30 reicht. Die Welle entspricht einer Sinuswelle über 360°. Es können auch mehr als ein Wellental bzw. ein Wellenberg vorgesehen sein.

In Fig. 8 ist eine hinsichtlich des Aufwandes besonders einfache Konstruktion für einen Sprühkopf dargestellt, welcher dadurch gekennzeichnet ist, daß im Zentrum der in der Regel rotationssymmetrisch ausgebildeten Membran 33 sowohl die Sprühdüse 27 als auch der Drosselkörper 30 angeordnet sind. Der Drosselkörper 30 ist ebenso wie bei den vorbeschriebenen Ausführungsformen integraler Bestandteil der Membran 33, wobei der Übergang zwischen Drosselkörper 30 und Membran 33 als nach außen hin offener Topf 50 zur Aufnahme einer Sprühdüsenkappe 51 mit zentraler Sprühdüsenöffnung 52 ausgebildet ist. Diese Sprühdüsen/Drosselkörper-Anordnung ist seitlich am Sprühkopf 26 angeordnet. Zu diesem Zweck ist am Sprühkopfgehäuse eine seitliche, vorzugsweise kreiszylindrische Ausnehmung 53 ausgebildet, in die die Membran 33 samt Sprühdüsen/Drosselkörper-Anordnung rastend eingesetzt ist, und zwar unter klemmender Fixierung einer Bodenplatte 54 mit zentraler Fluidöffnung 34, durch die sich der Drosselkörper 30 ähnlich wie bei den vorbeschriebenen Ausführungsformen hindurcherstreckt. Im Boden der topfartigen Aufnahme 50 für die Sprühdüsenkappe 51 sind sich axial erstreckende Fluiddurchgänge 55 ausgebildet, die die Fluidverbindung zur Sprühdüsenöffnung 52 gewährleisten.

Der Ventilkörper 30 samt Drosselabschnitt 35 ist bei der Ausführungsform nach Fig. 8 entsprechend derjenigen nach Fig. 5 ausgebildet. Der zur Drosselstelle führende Fluidkanal 28 innerhalb des Sprühkopfgehäuses 32 weist eine 90°-Umlenkung (Knieabschnitt) 56 auf. Im übrigen entspricht der Aufbau des Sprühkopfes 26 demjenigen der vorbeschriebenen Ausführungsformen.

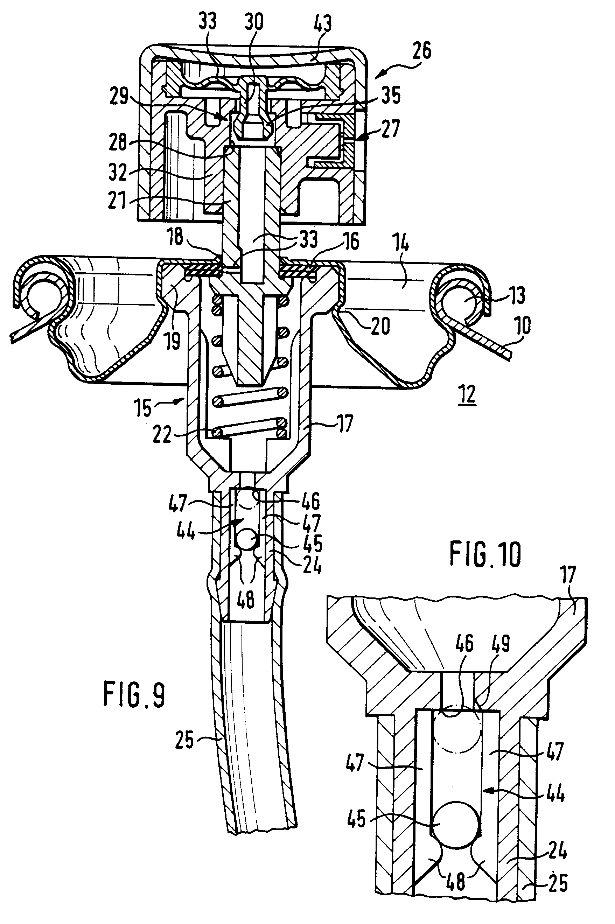

Die Anordnung nach den Fig. 9 und 10 weist gegenüber den vorbeschriebenen Konstruktionen ein zusätzliches Schließventil 44 auf, welches im Bereich des behälterinneren Anschlußstutzens 24 des Abgabeventilkörpers 17 wirksam ist derart, daß es bei etwa waagrechter, insbesondere Überkopflage des nichtdargestellten Aerosol-Behälters die Fluidverbindung zum Sprühkopf 26 unterbricht. Konkret ist das Schließventil 44 durch eine Ventilkugel 45 gebildet, die innerhalb des Anschlußstutzens 24 des Abgabeventilkörpers 17 axial zwischen einer in den Fig. 9 und 10 oberen Schließstellung (Ventilkugelsitz 46) und einer unteren Fluidfreigabestellung (wie in den Fig. 9 und 10 dargestellt) hin- und herbewegbar ist, wobei die axiale Führung der Ventilkugel 45 durch mindestens drei etwa gleichmäßig über den Umfang verteilt angeordnete Führungsrippen 47 gebildet ist. Die untere Fluidfreigabestellung ist durch radial nach innen ragende Haltevorsprünge 48 definiert, die an den in den Fig. 9 und 10 unteren bzw. behälterinneren Enden der axialen Führungsrippen 47 ausgebildet bzw. angeformt sind. Solange sich die Kugel 45 nicht in Schließstellung befindet, kann Fluid zwischen benachbarten Führungsrippen 47 hindurch und an der Kugel 45 vorbei bei geöffnetem Abgabeventil austreten.

Ohne das zusätzliche Schließventil 44 besteht mitunter die Gefahr, daß bei versehentlicher Verwendung des Aerosol-Behälters 10 überkopf durch das Steigrohr 25, Abgabeventil 15 und Sprühkopf 26 hindurch das komprimierte Treibmittel, nämlich komprimierte Luft oder komprimierter Stickstoff, entweicht mit der Folge, daß der Druck des Treibmittels entsprechend abfällt bis zur Funktionslosigkeit des Aerosol-Behälters. Diese Gefahr entsteht bereits bei etwa waagrechter Lage des Aerosol-Behälters. Diese unsachgemäße Verwendung des Aerosol-Behälters muß jedoch berücksichtigt werden. Aus diesem Grunde werden die vorgenannten Maßnahmen vorgeschlagen.

Bei Verwendung des Aerosol-Behälters in etwa aufrechter Lage ist der austretende Fluidstrom nicht in der Lage, die Schließkugel 45 bis zum Ventilkugelsitz 46 anzuheben, so daß der Produktaustrag jederzeit gewährleistet ist. Bei waagrechter Lage oder Überkopfbetätigung rollt bzw. fällt die Kugel 45 in ihre Schließstellung, so daß auch bei geöffnetem Abgabeventil 15 kein Druckgas nach außen entweichen kann.

Im Bereich des Ventilkugelsitzes 46 ist ein by-pass, insbesondere in Form eines schmalen Schlitzes 49, ausgebildet. Die dadurch bedingte Fluidverbindung vermeidet im Falle eines Unterdrucks im Ventilkörper, daß bei senkrechter Lage des Ventiles die Kugel 45 nicht zurückfällt und öffnet.

Im übrigen ist das Abgabeventil 15 sowie der Sprühkopf 26 entsprechend der Ausführungform nach den Fig. 1 bzw. 5 ausgebildet.

### Bezugszeichenliste

- 10: Aerosol-Behälter
- 11: Medium (Fluid)
- 12: Treibgas
- 13: Behälteröffnung
- 14: Deckel
- 15: Abgabe- bzw. Aerosol-Ventil
- 16: Dichtscheibe
- 17: Ventilkörper
- 18: Öffnung
- 19: Umfangsflansch
- 20: Ringvorsprung
- 21: Abgaberöhrchen
- 22: Schraubendruckfeder
- 23: Austragkanal
- 24: Anschlußstutzen
- 25: Steigrohr
- 26: Sprühkopf
- 27: Sprühdüse
- 28: Fluidverbindung bzw. -kanal
- 29: Drossel
- 30: Drosselkörper
- 31: Durchflußquerschnitt
- 32: Sprühkopfgehäuse
- 33: Membran
- 34: Fluid- bzw. Drosselöffnung
- 35: Drosselabschnitt
- 36: Rastvorsprung
- 37: Rastnut
- 38: Umfangsfläche
- 39: Axialnut
- 40: Drosselkugel
- 41: Schraubendruckfeder
- 42: Vorsprung
- 43: Kappe
- 44: Schließventil
- 45: Ventilkugel
- 46: Ventilkugelsitz
- 47: Führungsrippe
- 48: Haltevorsprung
- 49: Schlitz
- 50: Topfförmige Aufnahme
- 51: Sprühdüsenkappe
- 52: Sprühdüsenöffnung
- 53: Ausnehmung
- 54: Bodenplatte
- 55: Fluiddurchgang
- 56: Knieabschnitt des Fluidkanals 28

## Patentansprüche

1. Sprühkopf für einen Behälter (10) für eine unter dem Druck eines Treibgases (12), insbesondere komprimierter Luft oder dgl. stehende Flüssigkeit (11), Paste od. dgl., der am freien Ende eines Abgaberöhrchens (21) eines Abgabe-, insbesondere Aerosol-Ventils (15) angeordnet ist und eine Sprühdüse (27) aufweist, die mit dem Austragskanal (23) des Abgaberöhrchens (21) fluidverbinden ist, wobei in dieser Fluidverbindung (28) eine Drossel (29) mit einem elastisch vorgespannten Drosselkörper (30) angeordnet ist, an dessen einen Seite der Umgebungsdruck und an dessen anderer Seite der im Behälterinnern herrschende Überdruck wirksam ist und durch den der Durchflußquerschnitt (31) in Abhängigkeit vom Behälterüberdruck regelbar ist derart, daß bis zur im wesentlichen vollständigen Entleering des Behälters (10) durch die Sprühdüse (27) eine etwa konstante Menge Flüssigkeit pro Zeiteinheit austragbar ist,
**dadurch gekennzeichnet,** daß die elastische Vorspannung des Drosselkörpers (30) körperimmanent und im wesentlichen nur beim Gebrauch, d. h. bei Öffnung des Abgabeventils (15) wirksam ist derart, daß bei maximalem Behälterüberdruck ein minimaler Durchflußquerschnitt (31) offengehalten ist, während bei minimalem Restdruck der Durchflußquerschnitt (31) maximal ist.

2. Sprühkopf anch Anspruch 1,
**dadurch gekennzeichnet,** daß der Drosselkörper (30) einer im Sprühkopfgehäuse (32) angeordneten Membran (33) verbunden, insbesondere einstückig ausgebildet ist, die beim Gebrauch die elastische Vorspannung des Drosselkörpers (30) gewährleistet.

3. Sprühkopf nach Anspruch 1 oder 2,
**dadurch gekennzeichnet,** daß der Drosselkörper (30) einer im wesentlichen kreiszylindrischen Öffnung (34) innerhalb der Fluidverbindung (28) zwischen Abgaberöhrchen (21) und Sprühdüse (27) zugeordnet ist, derart, daß durch axiale Bewegung des Drosselkörpers (30) die genannte Öffnung (34) mehr oder weniger weit offen ist.

4. Sprühkopf nach Anspruch 3,
**dadurch gekennzeichnet,** daß sich der Drosselkörper (30) durch die in der Fluidverbindung (28) vorgesehene Öffnung (34) hindurcherstreckt, und dieser Öffnung ein Drosselkörper-Abschnitt (35) mit in axialer Richtung zunehmendem bzw. abnehmendem Querschnitt zugeordnet ist.

5. Sprühkopf, insbesondere nach einem der Ansprüche 1 bis 4,
**dadurch gekennzeichnet,** daß der elastisch nachgiebigen Membran (33) ein gesonderter Drosselkörper, insbesondere in Form einer Kugel (40) zugeordnet ist, der bzw. die entgegen der federelastischen Wirkung der Membran (33) elastisch vorgespannt ist, insbesondere mittels einer Schraubendruckfeder (41) derart, daß bei maximalem Behälterüberdruck ein minimaler Durchflußquerschnitt (31) offengehalten ist, während bei maximalem Restdruck der Durchflußquerschnitt (31) maximal ist.

6. Sprühkopf nach einem oder mehreren der Ansprüche 2 bis 5,
**dadurch gekennzeichnet,** daß die Membran (33) an der Oberfläche des Sprühkopfgehäuses (32) fixiert ist, insbesondere nach Art einer Rastverbindung (Rastvorsprung 36, Rastnut 37).

7. Sprühkopf nach einem oder mehreren der Ansprüche 2 bis 6,
**dadurch gekennzeichnet,** daß die Membran (33) (flach) kegelstumpfförmig ausgebildet ist, wobei die kleinere Grundfläche dem Behälter (10) näherliegt als die größere Grundfläche, längs deren Umfangsrand (36) die Membran (33) am Sprühkopfgehäuse (32) fixierbar ist, und wobei im Bereich der kleineren Grundfläche der Drosselkörper (30) sich zum Behälter (10) hin erstreckend angeordnet, insbesondere angeformt, ist.

8. Sprühkopf nach Anspruch 7,
**dadurch gekennzeichnet,** daß die Wandstärke der Membran (33) von radial außen nach radial innen bis zum Anschluß des Ventilkörpers (30) abnimmt.

9. Sprühkopf nach einem oder mehreren der Ansprüche 2 bis 8,
**dadurch gekennzeichnet,** daß die Membran (33) einen gewellten Radial-Querschnitt zwischen ihrem äußeren Umfangsrand und dem Anschluß des zentralen Drosselkörpers (30) aufweist (Fig. 5 - 7).

10. Sprühkopf nach einem oder mehreren der Ansprüche 2 bis 9,
**dadurch gekennzeichnet,** daß im Zentrum der vorzugsweise rotationssymmetrisch ausgebildeten Membran (33) sowohl die Sprühdüse (27) als auch der Drosselkörper (30) angeordnet sind (Fig. 8).

11. Sprühkopf nach einem oder mehreren der Ansprüche 2 bis 10,
**dadurch gekennzeichnet,** daß dem Drosselkörper (30), insbesondere unter Anordung im Bereich des Anschlußstutzens (24), des Abgabeventilkörpers (17) ein Schließventil (44) vorgeordnet ist, welches bei etwa waagrechter, insbesondere Überkopflage des Behälters (10) wirksam ist und die Fluidverbindung zum Sprühkopf (26) unterbricht.

12. Sprühkopf nach Anspruch 11,
**dadurch gekennzeichnet,** daß das Schließventil (44) durch eine Ventilkugel (45) gebildet ist, die innerhalb des Anschlußstutzens (24) des Abgabeventilkörpers (17) axial zwischen einer (oberen) Schließstellung (Ventilkugelsitz 46) und einer (unteren) Fluidfreigabestellung (Haltevorsprünge 48) hin- und herbewegbar ist, wobei die axiale Führung der Ventilkugel (45) durch mindestens drei etwa gleichmäßig über den Umfang verteilt angeordnete Führungsrippen (47) gebildet ist.

13. Sprühkopf nach Anspruch 12,
**dadurch gekennzeichnet,** daß im Bereich des Ventilkugelsitzes (46) ein by-pass, insbesondere in Form eines schmalen Schlitzes (49) ausgebildet ist.

## Claims

1. Spray head for a container (10) for a liquid (11), paste or the like pressurized by a propellant gas (12), in particular compressed air or the like, which spray head is disposed at the free end of a delivery tube (21) of a delivery valve, in particular an aerosol valve (15), and exhibits a spray nozzle (27) which is fluid-connected to the discharge duct (23) of the delivery tube (21), there being disposed in this fluid connection (28) a throttle valve (29) having an elastically pretensioned throttle-valve body (30), the one side of which is acted upon by the ambient pressure and the other side of which by the overpressure obtaining in the interior of the container and by virtue of which the flow cross-section (31) can be regulated in dependence on the container overpressure such that, up to the container (10) being essentially completely emptied, an approximately constant quantity of liquid per unit of time can be discharged through the spray nozzle (27), characterized in that the elastic pretensioning of the throttle-valve body (30) is immanent in that body and essentially takes effect only in use, i.e. upon the opening of the delivery valve (15), such that when the container overpressure is at a maximum a minimal flow cross-section (31) is kept open, whereas when the residual pressure is at a minimum the flow cross-section (31) is maximal.

2. Spray head according to Claim 1, characterized in that the throttle-valve body (30) is connected to a membrane (33), in particular of one-piece configuration, disposed in the spray head housing (32), which membrane guarantees, in use, the elastic pretensioning of the throttle-valve body (30).

3. Spray head according to Claim 1 or 2, characterized in that the throttle-valve body (30) is assigned to an essentially circular cylindrical opening (34) within the fluid connection (28) between the delivery tube (21) and the spray nozzle (27), such that, by axial movement of the throttle-valve body (30), the said opening (34) is more or less widely open.

4. Spray head according to Claim 3, characterized in that the throttle-valve body (30) extends through the opening (34) provided in the fluid connection (28) and to this opening there is assigned a portion (35) of the throttle-valve body, which portion has a cross-section which increases or decreases in the axial direction.

5. Spray head, in particular according to one of Claims 1 to 4, characterized in that to the elastically yielding membrane (33) there is assigned a separate throttle-valve body, in particular in the form of a ball (40), which is elastically pretensioned against the spring-elastic effect of the membrane (33), in particular by means of a compression spring (41), such that when the container overpressure is at a maximum a minimal flow cross-section (31) is kept open, whereas when the residual pressure is at a maximum the flow cross-section (31) is maximal.

6. Spray head according to one or more of Claims 2 to 5, characterized in that the membrane (33) is fixed on the surface of the spray head housing (32), in particular in the style of a catch connection (catch projection 36, catch groove 37).

7. Spray head according to one or more of Claims 2 to 6, characterized in that the membrane (33) is of a (flat) frustoconical configuration, the smaller base area being situated closer to the container (10) than the larger base area, along the peripheral margin (36) of which the membrane (33) can be fixed to the spray head housing (32) and, in the region of the smaller base area, the throttle-valve body (30) being disposed, in particular formed on, such that it extends in the direction of the container (10).

8. Spray head according to Claim 7, characterized in that the wall thickness of the membrane (33) decreases from radially outer to radially inner, up to the connection of the valve body (30).

9. Spray head according to one or more of Claims 2 to 8, characterized in that the membrane (33) exhibits a sinuous radial cross-section between its outer peripheral margin and the connection of the central throttle-valve body (30) (Figs. 5 - 7).

10. Spray head according to one or more of Claims 2 to 9, characterized in that, in the centre of the preferably rotationally symmetrically configured membrane (33), there are disposed both the spray nozzle (27) and the throttle-valve body (30) (Fig. 8).

11. Spray head according to one or more of Claims 1 to 10, characterized in that disposed in front of the throttle-valve body (30), in particular under an arrangement of the delivery valve body (17) in the region of the connecting socket (24), there is a closing valve (44), which takes effect in an approximately horizontal, in particular overhead position of the container (10) and interrupts the fluid connection to the spray head (26).

12. Spray head according to Claim 11, characterized in that the closing valve (44) is formed by a ball valve (45), which can be moved to and fro, within the connecting socket (24) of the delivery valve body (17), axially between an (upper) closing position (ball-valve seat 46) and a (lower) fluid release position (retaining projections 48), the axial guide of the ball valve (45) being formed by at least three guide ribs (47) distributed approximately evenly over the periphery.

13. Spray head according to Claim 12, characterized in that in the region of the ball-valve seat (46) there is configured a by-pass, in particular in the form of a narrow slot (49).

## Revendications

1. Tête de pulvérisation pour un récipient (10) contenant un fluide (11), pâte ou autres, pressurisé par un gaz propulseur (12), air comprimé notamment, ou autres, qui est disposée sur l'extrémité libre d'un tube de décharge (21) d'une soupape de décharge, d'une soupape aérosol (15) en particulier, et présente un gicleur (27) en liaison fluidique avec le conduit de décharge (23) du tube de décharge (21), un étranglement (29), avec un corps d'étranglement (30) soumis à une précontrainte élastique, étant disposé dans cette liaison fluidique (28), ce corps étant soumis à la pression ambiante sur l'un de ses côtés et à la pression effective, régnant à l'intérieur du récipient, sur son autre côté, et permettant de régler la section de passage (31) en fonction de la pression effective dans le récipient, de sorte qu'une dose de fluide à peu près constante par unité de temps peut être dispersée par le gicleur (27), jusqu'à la décharge essentiellement complète du récipient (10), caractérisée en ce que la précontrainte élastique du corps d'étranglement (30) est immanente à ce corps, et n'est active qu'en cas d'utilisation essentiellement, c'est-à-dire en position d'ouverture de la soupape de décharge (15), de sorte qu'une section de passage (31) minimale est maintenue en position d'ouverture pour une pression effective maximale dans le récipient, tandis que la section de passage (31) est maximale pour une pression résiduelle minimale.

2. Tête de pulvérisation suivant la revendication 1, caractérisée en ce que le corps d'étranglement (30) est assemblé, réalisé d'une seule pièce notamment, avec une membrane (33), disposée dans le corps (32) de la tête de pulvérisation, et garantissant la précontrainte élastique du corps d'étranglement (30) en cours d'utilisation.

3. Tête de pulvérisation suivant l'une des revendications 1 et 2, caractérisée en ce que le corps d'étranglement (30) est associé à une ouverture (34) essentiellement cylindrique et circulaire, à l'intérieur de la liaison fluidique (28), entre le tube de décharge (21) et le gicleur (27), de sorte que l'ouverture (34) citée est plus ou moins ouverte par un déplacement axial du corps d'étranglement (30).

4. Tête de pulvérisation suivant la revendication 3, caractérisée en ce que le corps d'étranglement (30) s'étend au travers de l'ouverture (34), prévue dans la liaison fluidique (28), une section (35) du corps d'étranglement, avec une section transversale croissante et/ou décroissante dans le sens axial, étant associée à cette ouverture.

5. Tête de pulvérisation, suivant l'une quelconque des revendications 1 à 4 notamment, caractérisée en ce qu'un corps d'étranglement séparé, en forme d'une bille (40) en particulier, est associé à la membrane (33) flexible par élasticité, ce corps et/ou cette bille étant soumis à une précontrainte élastique contre l'effet d'élasticité de la membrane (33), au moyen d'un ressort de pression hélicoïdal (41) notamment, de sorte qu'une section de passage (31) minimale est maintenue en position d'ouverture pour une pression effective maximale dans le récipient, tandis que la section de passage (31) est maximale pour une pression résiduelle minimale.

6. Tête de pulvérisation suivant l'une quelconque ou plusieurs des revendications 2 à 5, caractérisée en ce que la membrane (33) est fixée sur la surface du corps (32) de la tête de pulvérisation, à la manière d'un assemblage par enclenchement notamment (saillie d'arrêt 36, rainure d'arrêt 37).

7. Tête de pulvérisation suivant l'une quelconque ou plusieurs des revendications 2 à 6, caractérisée en ce que la membrane (33) a une réalisation tronconique (plate), la surface de base inférieure étant plus proche du récipient (10) que la surface de base supérieure, le long du bord périphérique (36) de laquelle la membrane (33) peut être fixée sur le corps (32) de la tête de pulvérisation, et le corps d'étranglement (30) étant disposé, conformé notamment, en s'étendant en direction du réservoir (10), dans la zone de la surface de base inférieure.

8. Tête de pulvérisation suivant la revendication 7, caractérisée en ce que l'épaisseur de paroi de la membrane (33) diminue du sens radial externe dans le sens radial interne, jusqu'à la jonction du corps de soupape (30).

9. Tête de pulvérisation suivant l'une quelconque ou plusieurs des revendications 2 à 8, caractérisée en ce que la membrane (33) présente une section radiale ondulée entre son bord périphérique externe et la jonction du corps d'étranglement central (30) (figures 5 à 7).

10. Tête de pulvérisation suivant l'une quelconque ou plusieurs des revendications 2 à 9, caractérisée en ce que le gicleur (27), comme le corps d'étranglement (30), sont disposés au centre de la membrane (33), à symétrie de révolution de préférence (figure 8).

11. Tête de pulvérisation suivant l'une quelconque ou plusieurs des revendications 1 à 10, caractérisée en ce qu'une soupape de fermeture (44) est disposée en amont du corps d'étranglement (30), montée notamment dans la zone de la tubulure de raccordement (24) du corps (17) de la soupape de décharge, l'effet de cette soupape s'exerçant en position à peu près horizontale, de renversement en particulier, du récipient (10), et coupant la liaison fluidique avec la tête de pulvérisation (26).

12. Tête de pulvérisation suivant la revendication 11, caractérisée en ce que la soupape de fermeture (44) est formée par une bille de soupape (45), qui peut se déplacer en va-et-vient dans le sens axial, à l'intérieur de la tubulure de raccordement (24) du corps (17) de la soupape de décharge, entre une position de fermeture (supérieure) (siège 46 de la bille de soupape) et une position d'ouverture de fluide (inférieure) (saillies de retenue 48), le guidage axial de la bille de soupape (45) étant formé par trois nervures de guidage (47), au moins, réparties à peu près régulièrement sur le pourtour.

13. Tête de pulvérisation suivant la revendication 12, caractérisée en ce qu'un bipasse, en forme d'une fente étroite (49) notamment, est réalisé dans la zone du siège (46) de la bille de soupape.
